# EUROPEAN PATENT APPLICATION

(11) **EP 2 366 449 A2**
(43) Date of publication of application: **21.09.2011**
(21) Application number: 09826266.0
(22) Date of filing: 11.11.2009
(51) Int. Cl.: B01D 69/00

(54) **MEMBRANE WITH A PATTERNED SURFACE, METHOD FOR MANUFACTURING SAME, AND WATER TREATMENT PROCESS USING SAME**

(30) Priority: 11.11.2008 KR 20080111880
(71) Applicant: SNU R&DB Foundation, Seoul 151-742 (KR)
(72) Inventor: LEE, Chung-Hak, Seoul 151-050 (KR); LEE, Hong Hee, Seoul 151-774 (KR); WON, Young June, Wonju-si Gangwon-do 220-823 (KR); KIM, Tae Il, Seoul 151-060 (KR)
(74) Representative: Dossmann, Gérard
(86) International application number: PCT/KR2009/006608
(87) International publication number: WO 2010/056034

(57) **Abstract**

Provided is a membrane in which the surface in contact with a fluid to be treated has repetitive convex-concave patterns.

Also provided is a method for manufacturing a membrane, compring: (i) casting a mold, one surface of which having repetitive convex-concave patterns, with a polymer solution to form a mold-polymer layer laminate in which a polymer layer having a surface with replica patterns inverse to the patterns of the mold is formed on the patterns of the mold; and (ii) removing the mold from the mold-polymer layer laminate.

Since the disclosed membrane has a patterned surface, the filtering area in contact with water to be treated is increased, and the membrane is protected from a cake/film which contaminates the membrane. Therefore, the membrane significantly improves filtering performance when it is applied in a water treatment process.

## Description

### [Technical Field]

The present disclosure relates to a membrane having a novel structure in which the surface in contact with a fluid to be treated has repetitive convex-concave patterns, a method for manufacturing the membrane, and a water treatment process using the same.

### [Background Art]

Recently, as high-purity, high-quality products are demanded with industrial development, separation processes using membrane are highly esteemed and studied as important subjects in various fields, including chemical, food, drug, medical, biological and environmental industries. In the environmental sector, membrane processes for water treatment are gaining attentions as a possible solution to shortage of clean water.

In general, membranes (synthetic membranes) used for water treatment can be classified into symmetric and asymmetric types according to their cross-sectional structures. Whereas the symmetric membrane consists of a (single) layer of a homogeneous porous material along the cross-section of the membrane, the asymmetric membrane consists of two different layers, i.e., a skin layer which is dense and thin with a thickness usually smaller than 1 µm, and a porous support layer for physically supporting the skin layer, along the cross-section of the membrane. In the asymmetric membrane, the filtration is practically performed in the skin layer. As a membrane for water treatment, the asymmetric membrane which can endure high operation pressure and have good mechanical stability is usually employed.

Also, the membranes may be divided into tubular type, plate & frame type, spiral-wound type, hollow fiber type, or the like according to their modularity.

The membrane for water treatment is prepared by phase conversion (solvent exchange), sintering, stretching, interfacial polymerization, or the like. The asymmetric membrane is typically prepared by phase conversion (solvent exchange) or interfacial polymerization. The phase conversion (solvent exchange) method is employed to commercially produce ultrafiltration (UF) or nanofiltration (NF) membranes made of general polymer materials such as polysulfone, cellulose, nylon, etc. After the polymer material (raw material) is dissolved in a suitable solvent at ambient temperature or elevated temperature to prepare a homogeneous solution, it is formed into tubular, plate or hollow-fiber shape and then dipped in a nonsolvent. Then, solvent exchange resulting from diffusion of the solvent and the nonsolvent leads to change in the composition of the polymer solution. Finally, as the polymer is precipitated, the space that has been occupied by the solvent or nonsolvent remains as pores, resulting in a porous membrane. The interfacial polymerization method is a process of polymerizing the raw material (monomers) for the skin layer at the interface with the support layer to prepare a membrane. Whereas the phase conversion method is usually applied to the asymmetric membrane wherein the skin layer and the support layer have the identical material or morphology, the interfacial polymerization method is applied to prepare the asymmetric membrane wherein the skin layer and the support layer have different material or morphology, and the resulting membrane by the latter has good mechanical strength.

Membrane process for water treatment may be applied in various fields, including drinking water production, domestic wastewater treatment, industrial wastewater treatment and so forth. For example, in a drinking water production process consisting of flocculation, sedimentation and filtration, the sedimentation tank may be omitted and the filtration using sand may be replaced by membrane filtration. In addition, in a wastewater treatment process using the activated sludge bioreactor, replacement of the sedimentation and separation of activated sludge with membrane filtration allows improved filtration efficiency with reduced space for facilities. In particular, the membrane bioreactor (MBR) process wherein the membrane filtration is combined with a bioreactor has several advantages in that it can be operated stably against external impact loads and can reduce sludge production while being economical as compared to other bioreactor processes. Due to such advantages, the membrane bioreactor process is currently operated in about 4,000 plants around the world, and distribution and researches are carried out considerably.

The biggest obstacle in the membrane process for water treatment is the "membrane fouling", i.e. the contamination of the membrane due to the formation of a cake/film as soluble and particulate organic matters, inorganic matters, microorganisms, or extracellular polymeric substances (EPS) derived from the microorganisms existing in the water to be treated are adsorbed onto the surface or pores of the membrane. The membrane fouling is caused in part by the structural feature of the membrane. Since it serves as filtration resistance to degrade the filtration performance of the membrane, it deteriorates the economic efficiency of the membrane process for water treatment by inducing reduction of permeability, shortening of cleaning cycle and lifespan of the membrane, and increase of energy consumption required for filtration.

In order to prevent or reduce membrane fouling in the membrane process for water treatment, physical (e.g., aeration) or chemical (e.g., coagulation pretreatment or modification of membrane surface by coating) means have been applied. However, they are economically unfavorable since the physical method such as aeration requires additional energy and the chemical method such as coagulation pretreatment or membrane modification requires additional facilities or considerable costs.

### [Disclosure]

### [Technical Problem]

In addition to the above-mentioned economic inefficiency, the existing methods for preventing/reducing membrane fouling caused by the formation of cake/film on the membrane are limited in that they do not provide a fundamental solution based on the structural or morphological feature of the membrane surface itself.

The inventors of the present disclosure have consistently performed studies to solve the above problems, and have found out that a membrane with a novel structure can be prepared by forming repetitive convex-concave patterns on the membrane surface using the technique employed in the semiconductor process to form fine patterns on a device, and that, when the membrane is applied for a water treatment process, permeability can be increased due to increased effective membrane area and fouling of the membrane can be prevented or reduced.

### [Technical Solution]

Specifically, the present disclosure is directed to providing a membrane in which the surface in contact with a fluid to be treated has repetitive convex-concave patterns.

### [Advantageous Effects]

The membrane according to the present disclosure can replace the existing membrane in a general membrane-filtration process or a membrane process for water treatment (e.g., physical/chemical or bioreactor) and provide improved filtering performance.

### [Description of Drawings]

Fig. 1 shows a cross-section of a symmetric membrane having a patterned structure according to a specific embodiment the present disclosure, and Figs. 2 and 3 shows cross-sections of asymmetric membranes having a patterned structure according to another specific embodiments the present disclosure.
Figs. 4 to 6 show a schematic view (including cross-section), a top-view SEM image and a cross-sectional SEM image of an asymmetric membrane having pyramidal patterns formed on the surface according to a specific embodiment the present disclosure.
Figs. 7 to 9 show a schematic view (including cross-section), a top-view SEM image and a cross-sectional SEM image of an asymmetric membrane having embossed patterns formed on the surface according to a specific embodiment the present disclosure.
Figs. 10 to 12 show a schematic view (including cross-section), a top-view SEM image and a cross-sectional SEM image of an asymmetric membrane having prismatic patterns formed on the surface according to a specific embodiment the present disclosure.
Figs. 13 to 15 show a method for preparing a membrane according to a specific embodiment of the present disclosure. The method includes: a step of casting a mold with a skin layer to form a mold-skin layer laminate (Fig. 13); a step of attaching a support layer to the skin layer side of the mold-skin layer laminate by means of a middle layer to form a mold-skin layer-middle layer-support layer laminate (Fig. 14); and a step of removing the mold from the laminate to obtain a membrane having a configuration of skin layer-middle layer-support layer (Fig. 15).
Fig. 16 shows an apparatus (stirred cell) for testing the permeability membranes of Example 2 and Comparative Example 1.
Fig. 17 shows a permeability test result of the membranes of Example 2 and Comparative Example 1.
Fig. 18 shows an apparatus for testing the degree of adherence of membrane fouling substances on the surface of a membrane.
Fig. 19 shows the configuration of membrane bioreactor apparatuses of Example 2 and Comparative Example 1.
Fig. 20 shows a result of operating the membrane bioreactor apparatuses of Example 2 and Comparative Example 1.

### [Best Mode]

The membrane according to the present disclosure may be either a symmetric or an asymmetric membrane as long as repetitive patterns can be formed on the surface to increase the effective membrane area of the membrane.

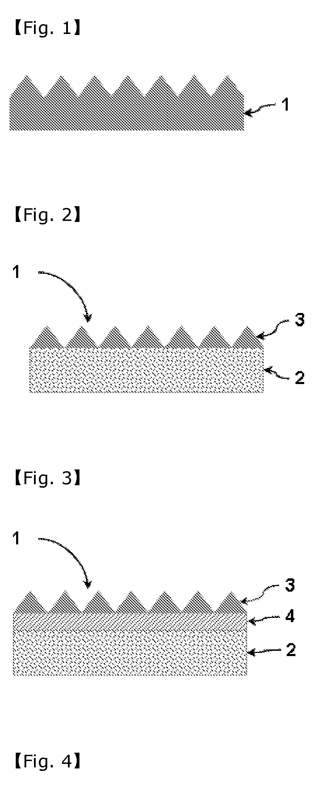

For example, as shown in Fig. 1, a membrane 1 according to the present disclosure may be a symmetric membrane having repetitive convex-concave patterns (e.g., prismatic patterns as shown in Fig. 1) on the surface.

Also, when the membrane is embodied as an asymmetric membrane, it may be an asymmetric membrane comprising a porous support layer and a skin layer disposed on the support layer, wherein the skin layer has repetitive convex-concave patterns on the side opposite to the support layer.

For instance, as shown in Fig. 2, a membrane according to the present disclosure may be an asymmetric membrane comprising a porous support layer 2 and a skin layer 3 with a different morphology from that of the support layer 2. The skin layer may have repetitive convex-concave patterns on its surface.

Because of the repetitive convex-concave patterns formed on the surface in contact with a fluid to be treated, formation of a cake/film that causes membrane fouling is prevented and the membrane according to the present disclosure has significantly improved filtering performance.

The asymmetric membrane may be prepared by adjoining the skin layer and the support layer which have been prepared separately. In this case, a middle layer 4 may be further included between the skin layer and the support layer, as shown in Fig. 3, in order that the two layers can be attached easily. The middle layer may be made of a polymer which is the same as or similar to that of the skin layer.

The porous support layer of the asymmetric membrane may be made of any material commonly used for asymmetric membranes which does not react with the organic solvents used to prepare the membrane, without particular limitation. For example, polysulfone resin, fabric, etc. may be used.

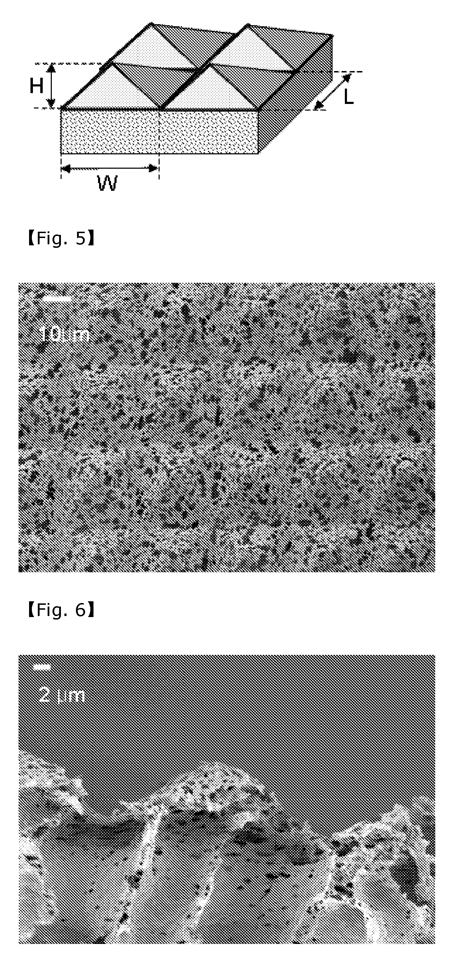

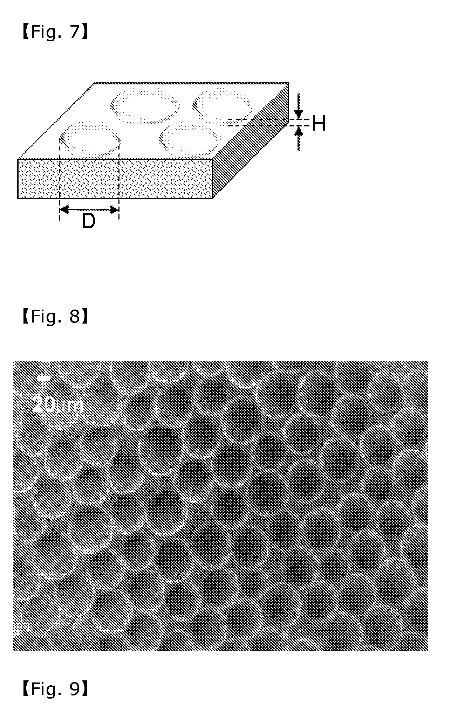

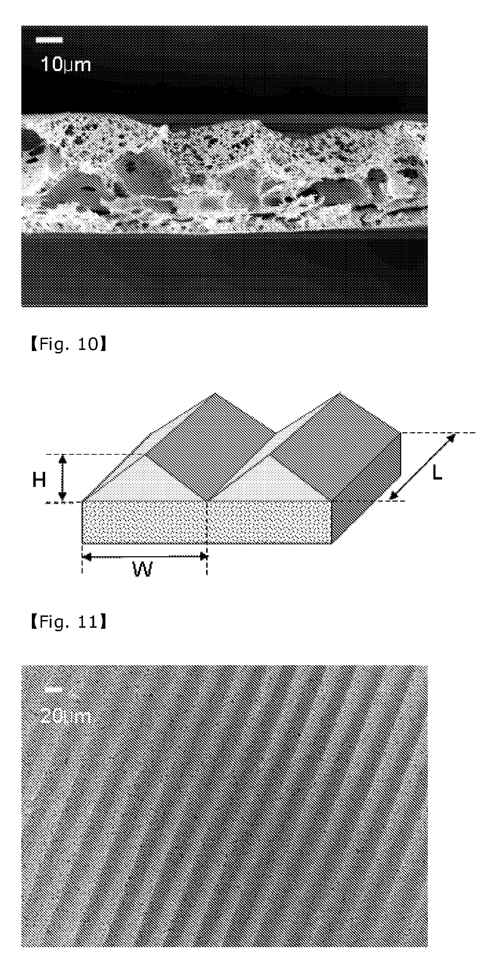

The shape of the patterns formed on the surface of the membrane according to the present disclosure is not particularly limited as long as the effective membrane area (contact area with the fluid to be treated) can be increased sufficiently. For example, the patterns may have a shape selected from a group consisting of pyramidal (Figs. 4 to 6), embossed (Figs. 7 to 9) and prismatic (Figs. 10 to 12) shapes. Specifically, the shape of the patterns may be determined considering the characteristics of the process or module to which the membrane according to the present disclosure is applied. For example, when the membrane is operated under the condition of a common water treatment process, prismatic patterns may be more appropriate for crossflow-type filtration to minimize dead zone between the individual patterns. Especially, they may be useful under the turbulence-dominant or turbulence-like conditions with a sufficiently large Reynolds number (N_{Re}), e.g., N_{Re} > 2000 for a cylindrical module). And, pyramidal patterns may be more appropriate for the dead-end type to minimize dead zone between the patterns.

In the present disclosure, the polymer layer (including the skin layer) on which the repetitive patterns are formed may be made of any material as long as the patterns can be formed on its surface, without particular limitation. For example, polysulfone-, polyamide-, polycarbonate-, cellulose acetate- or fluorine-based organic polymer may be used. In particular, a fluorine-based thermoplastic resin may be used preferably since it has good chemical resistance. And, polyvinylidene fluoride (PVDF) may be used more preferably since the absorbent DMF can be used as a solvent.

The patterns of membrane according to the present disclosure may be formed such that surface roughness is 1.1-1.5. As used in the present disclosure, the surface roughness is a measure of the degree of roughness (i.e., convexness and concaveness) of the patterns formed on the membrane surface. It is defined as the ratio of actual surface area to geometrical projected area of respective patterns. For example, the surface roughness of the prismatic patterns shown in Fig. 10 is calculated by the equation: surface roughness (SR) = 2 × L·{(W / 2)² + H²}^{1/2}/ (W·L). When the patterns on the membrane surface have a surface roughness smaller than 1.1, the effect of prevention from membrane fouling due to the increased effective membrane surface area decreases significantly. And, when the surface roughness exceeds 1.5, dead zone may occur between the patterns, thereby resulting in severe membrane fouling.

Methods for forming the patterns on the membrane surface are not particularly limited as long as repetitive patterns with a size of several nanometers to hundreds of micrometers can be formed. A representative example is the soft lithography technique used to form patterns on a device surface in the semiconductor process.

The soft lithography technique is developed to supplement the high processing cost and small processing area problems of the traditional lithography methods represented by electron beam (e-beam) lithography. In this process, replica molds made of a flexible and soft material such as polydimethylsiloxane (PDMS), fluorine-based polymer, etc. and having the same patterns as that of the master mold are fabricated in large quantity, and the desired patterns are formed using them.

The method for preparing a membrane having a patterned surface according to the present disclosure, wherein the surface patterning technique for a semiconductor device is applied to the membrane made of the organic polymer, is based on the phase conversion technique. It comprises: (i) a step of casting (or impregnating) a mold, one surface of which having repetitive convex-concave patterns, with a polymer solution to form a mold-polymer layer laminate in which a polymer layer having a surface with replica patterns inverse to the patterns of the mold is formed on the patterns of the mold; and (ii) a step of removing the mold from the mold-polymer layer laminate.

In case an asymmetric membrane comprising a skin layer and a support layer is desired, the membrane may be prepared by a method comprising: (a) a step of casting (or impregnating) a mold, one surface of which having repetitive convex-concave patterns, with a polymer solution to form a mold-skin layer laminate in which a polymer skin layer having a surface with replica patterns inverse to the patterns of the mold is formed on the patterns of the mold; (b) a step of disposing a support layer to the skin layer side of the mold-skin layer laminate; and (c) a step of removing the mold from the mold-skin layer laminate.

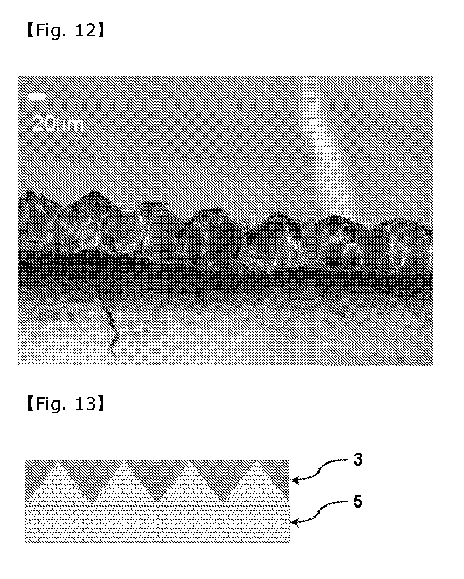

For example, as shown in Fig. 13, after casting a mold 5, one surface of which having repetitive convex-concave patterns, with a polymer solution, the solvent may be removed (e.g., by phase conversion) to form a polymer skin layer 3 on the mold.

Although not shown in the figure, the mold may be placed on, for example, a glass substrate and the mold may be casted by injecting the polymer solution between the substrate and the mold. Then, the solvent may be adsorbed and evaporated to form the polymer skin layer.

The mold used in the present disclosure is not specially limited as long as it has fine patterns with a size of several nanometers to hundreds of micrometers and is made of a material resistant to organic solvents. For example, a master mold made of a ceramic material such as silicon, quartz, etc., or a replica mold used in the semiconductor process such as electron beam lithography, photolithography, soft lithography, or the like may be used. As specific examples of a relatively inexpensive material for preparing the replica mold, polydimethylsiloxane (PDMS) (e.g., SYLGARD® 184 silicone elastomer kit available from Dow Corning) may be used for micrometer-scale patterns, and fluorine-based polymer (e.g., Teflon available from DuPont) may be used for nanometer-scale patterns.

The polymer solution casted into the mold may be prepared by dissolving a raw polymer material of the polymer layer (including the skin layer), on which the patterns will be formed, in a solvent. The solvent of the polymer solution is not particularly limited as long as it can homogeneously dissolve the polymer. For example, an organic solvent such as DMF, DMF/acetone mixture, etc. may be used.

After the mold-skin layer laminate is prepared, the porous support layer 2 is disposed on the side of the skin layer 3. For disposing the porous support layer on the mold-skin layer laminate, methods commonly employed to attach sheet-type objects can be used without particular limitation. For example, the mold-skin layer laminate may be simply attached on the support layer, for example, by pressing.

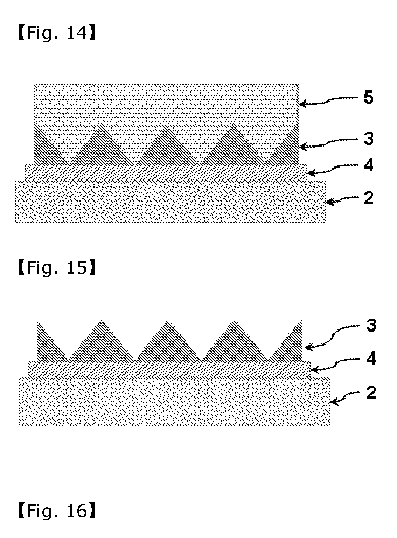

The asymmetric membrane according to the present disclosure may further comprise the middle layer 4 between the skin layer and the support layer so as to easily join the two layers (see Fig. 14). In this case, the mold-skin layer laminate may be disposed after laminating the middle layer on the support layer, or the middle layer may be spin coated between the mold-skin layer laminate and the support layer while rotating them.

After the mold-skin layer laminate is disposed and fixed on the support layer, the mold 5 is removed to prepare the membrane having a patterned surface as shown in Fig. 15. In addition, the membrane may be prepared into various module such as a plate & frame or spiral-wound module by an adequate additional process.

The membrane according to the present disclosure can replace the existing membrane in a membrane filtration process or a membrane process for water treatment (e.g., physical/chemical or bioreactor).

### [Mode for Invention]

### Example 1

### [Preparation of membrane according to present disclosure]

An asymmetric polymer membrane was prepared by immersion precipitation. A polymer solution as the raw material of a skin layer was prepared by dissolving polyvinylidene fluoride (PVDF, M_{w}: 530,000, available from Sigma Aldrich) in DMF (available from Sigma Aldrich) to 12 wt% by stirring overnight at 60°C and then adding acetone to make the final concentration of PVDF 3.2 wt%.

Separately from this, polydimethylsiloxane (PDMS) solution (SYLGARD® 184 silicone elastomer kit, available from Dow Corning) was casted into three master molds (patterned silicon wafers) having pyramidal patterns, prismatic patterns and embossed patterns respectively, followed by drying for 12 hours at 60°C to form three PDMS replica molds having replica (i.e., pyramidal, prismatic and embossed) patterns inverse to the patterns of the master molds.

The PVDF solution was casted into the three PDMS replica molds with an amount of 0.042 g/cm² each. Then, after drying in the air for 3 minutes, immersion precipitation was carried out in a water bath (containing ultrapure water).

In order to form a middle layer for attaching easily three mold-skin layer laminates formed by the immersion precipitation to a support layer, the same PVDF solution as that for the skin layer was applied with the same amount (0.042 g/cm²) on the skin layer side of the mold-skin layer laminate. Then, after disposing a polysulfone support layer (PES Filter, available from Woongjin Coway) on the skin layer side of the mold-skin layer laminate, immersion precipitation was further carried out in distilled water to prepare three mold-membrane laminates.

Finally, the PDMS replica mold was separated by spraying a small amount of isopropyl alcohol to the PDMS replica mold side of the mold-membrane laminate to prepare three membranes having a configuration of skin layer-middle layer-support layer.

### [Morphology of membrane according to present disclosure]

Pattern dimension, surface roughness, permeability, etc. of the prepared three membranes were measured.

The dimension of the patterns formed on the surface of the three membranes was observed using an SEM apparatus. Overall, the PDMS replica molds and the membranes prepared using the same showed practically the same or very similar pattern dimension. For the pyramidal patterns, average values of pattern width (W), length (L) and height (H) were 28 µm, 28 µm and 10 µm, respectively. For the prismatic patterns, average values of pattern width (W) and height (H) were 50 µm and 20 µm, respectively. For the embossed patterns, average values of pattern diameter (D) and height (H) were 50 µm and 15 µm, respectively.

Surface roughness (the ratio of actual surface area to geometrical projected area) of the patterns formed on the surface of the three membranes was calculated as 1.23 (pyramidal patterns), 1.28 (prismatic patterns) and 1.17 (embossed patterns).

### Example 2

### [Permeability of membrane according to present disclosure]

Permeability of the three patterned membranes (plate & frame type) prepared in Example 1 was measured using a dead-end type stirred cell system (Amicon® 8010, membrane area: 4.91cm², cell volume: 10 mL, maximum operation pressure: 75 psi) shown in Fig. 16. To describe specifically, when a pressure is applied to a tank 12 using a compressed nitrogen cylinder 11, ultrapure water contained in the tank is transferred to a stirred cell 13. The ultrapure water transferred to the stirred cell is filtered through a membrane 1 and flows to a balance 14 connected to a computer 15. The filtration volume of the water is measured with 5-minute intervals. Permeability was calculated from the filtration volume. After cutting the three patterned membranes prepared in Example 1 to fit the membrane area of the stirred cell and then placing them into the stirred cell, permeability (L·m⁻²·hr⁻¹) was measured while incrementally increasing the pressure (measured by a pressure gauge 16) applied to the tank 12 from 10 kPa, to 15 kPa, 20 kPa and 25 kPa.

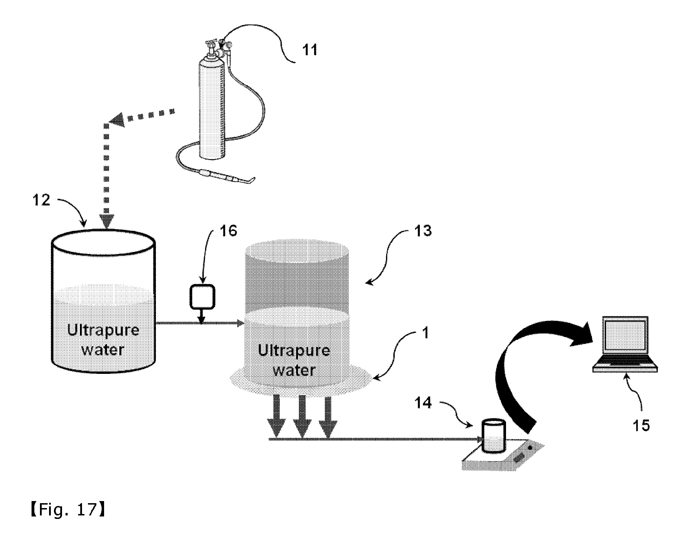

All the three membranes showed improved permeability. As seen from Fig. 17, the permeability increased linearly with the increase of the pressure, with relatively large slopes. The slope of the flux vs. pressure plots was approximately 38.1 (pyramidal patterns), 39.9 (prismatic patterns) and 34.0 (embossed patterns).

### [Degree of adherence of membrane fouling substances on surface of membrane according to present disclosure]

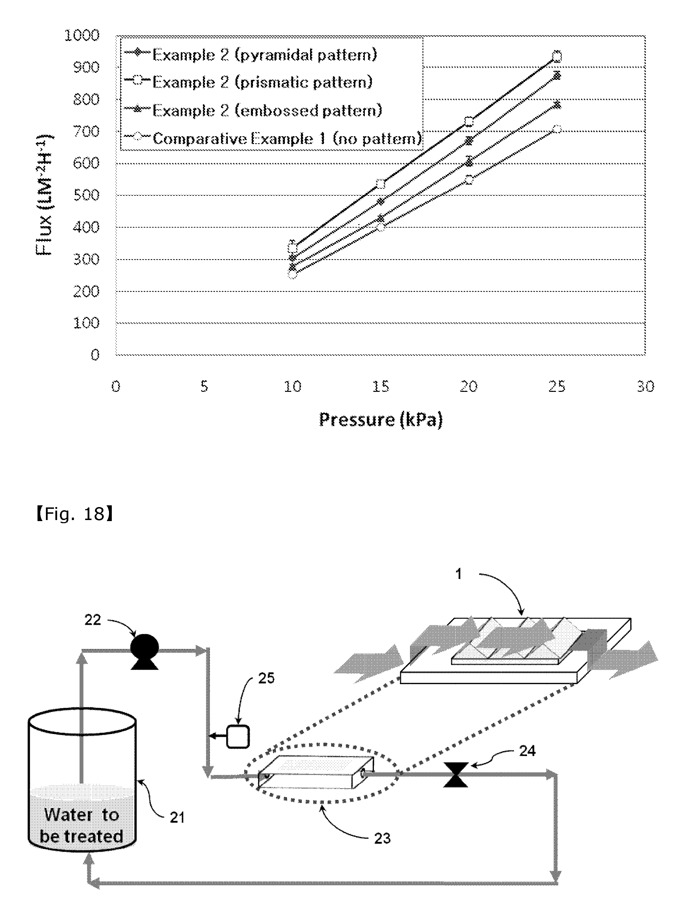

An apparatus shown in Fig. 18 was used to evaluate the degree of adherence of microorganisms causing membrane fouling in the membrane bioreactor process on the surface of the membranes prepared in Example 1.

The water to be treated prepared by diluting *P. aeruginosa* labeled with green fluorescent protein in ultrapure water was added to a tank 21 of 6L volume. The water to be treated was transferred to a crossflow-type module 23 (made of acrylic resin, membrane area: 10.5 cm², channel height: 2 mm) in which a membrane 1 having pyramidal patterns is provided, at a constant flow rate (15 mL/min) using a suction pump 22, and the pressure applied to the module (measured using a pressure gauge 25 provided in front of the module) was adjusted to 5 kPa using a valve 24 provided behind the module. After running the apparatus at a flow rate of the water to be treated through the module of 0.0083 m/s (corresponding to a Reynolds number of about 27) by total-recycle mode for 3 hours, the quantity of microorganisms adhered to the membrane per unit surface area was measured.

*P. aeruginosa* is well known as a pathogenic microorganism that forms biofilm. The apparatus was operated for 3 hours without supplying nutrients in order to measure the initial degree of adherence of the microorganism. The degree of adherence of the membrane fouling substance on the membrane surface was evaluated at three zones, i.e. inlet, middle and outlet zones, of the module. The number of the microorganisms per unit area was counted using a fluorescence microscope (Eclipse E600, Nikon). Measurements were made 2 times.

The average number of the microorganisms adhered on the three zones per unit area was 1.6 (±1.1).

### [Water treatment using membrane according to present disclosure]

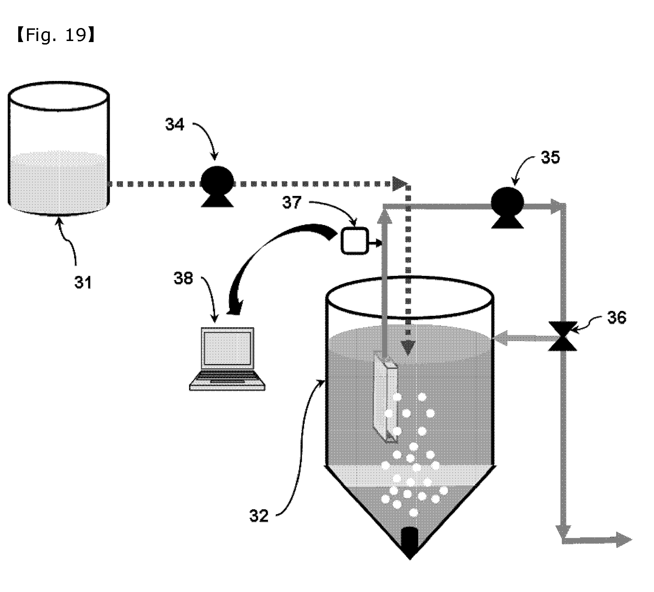

A submerged-type module having the membrane (pyramidal patterns) prepared in Example 1 was applied to a laboratory-scale membrane bioreactor (MBR) shown in Fig. 19. Specifically, activated sludge was inoculated while supplying synthetic wastewater (see Table 1) from a synthetic wastewater tank 31 to a 6-L reactor 32 made of acrylic resin using a pump 34. The synthetic wastewater was filtered through a membrane module 33 using a suction pump 35 so that the permeability was constant at 15 L·m⁻²·hr⁻¹ (Data is transferred from a pressure gauge 37 to a computer 38). Gray water-level treated water was obtained. The activated sludge had been collected from a sewage treatment plant in Sihwa, Korea, and had been sufficiently acclimated in the synthetic wastewater.

**[Table 1]**

| Composition of synthetic wastewater | |
|---|---|
| Substances | Concentration (g/L) |
| Glucose | 1 |
| Yeast extract | 0.05 |
| Bactopeptone | 0.05 |
| (NH₄)₂SO₄ | 0.5 |
| K₂H₂PO₄ | 0.3 |
| KH₂PO₄ | 0.3 |
| MgSO₄ | 0.009 |
| FeCl₃ | 0.0002 |
| NaCl | 0.007 |
| CaCl₂ | 0.0002 |
| CoCl₂ | 0.0024 |
| NaHCO₃ | 0.15 |

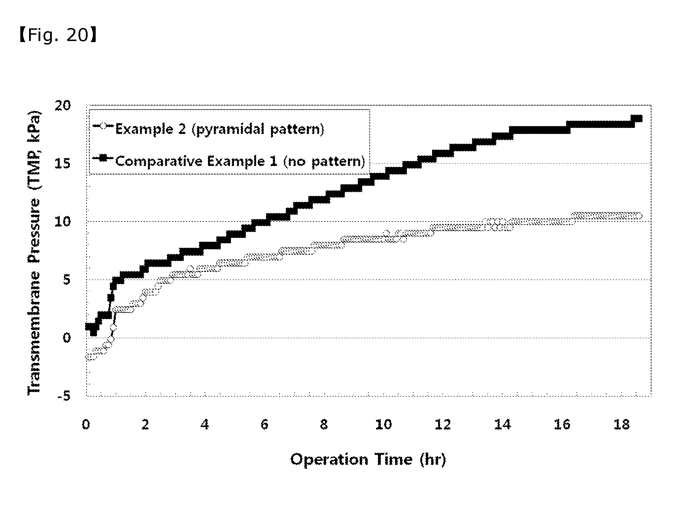

The filtrate from the module was discharged or totally recycled to the reactor using a 3-way valve 36 according to the level of the MBR. As the operation proceeds, biofilm is formed on the membrane surface and the membrane permeability is decreased due to the membrane fouling. The degree of membrane fouling was quantified by transmembrane pressure (TMP). The larger the transmembrane pressure, the larger is the degree of membrane fouling. The transmembrane pressure was only about 10-11 kPa even after operation for 20 hours (see Fig. 20). Although not shown in the figure, the transmembrane pressure did not increase even after 20 hours.

### Comparative Example 1

A plate & frame type membrane "with no patterns formed on the surface" was prepared in the same manner as in Example 1, except for omitting the pattern formation using the PDMS replica mold. The prepared membrane was subjected to permeability test using a stirred cell, evaluation of degree of adherence of membrane fouling substances on the membrane surface and water treatment (MBR) process, in the same manner as in Example 2.

As seen from Fig. 17, the membrane with no patterns formed on the surface showed relatively less increase in permeability with the increase of pressure, thus exhibiting slightly lower permeability. The slope of the flux vs. pressure plots was approximately 30.3. And, the number of microorganisms adhered on the unit area of the membrane surface was larger, with 5.3 (±1.4) on the average.

When the membrane with no patterns formed on the surface was used to operate the membrane bioreactor (MBR), the transmembrane pressure reached about 18-19 kPa after operation for 20 hours, as seen from Fig. 20.

### [Industrial Applicability]

Because of the patterns formed on the skin layer, the membrane according to the present disclosure has increased filtering area which is in contact with water to be treated and formation of a cake/film causing membrane fouling can be prevented. As a result, when the membrane is used for water treatment, the filtering performance is improved remarkably.

## Claims

1. A membrane having repetitive convex-concave patterns formed on a surface in contact with a fluid to be treated.

2. The membrane according to claim 1, which comprises a porous support layer and a polymer skin layer disposed on the support layer, wherein repetitive convex-concave patterns are formed on a surface of the skin layer in contact with a fluid to be treated.

3. The membrane according to claim 2, which further comprises a middle layer between the polymer skin layer and the support layer.

4. The membrane according to claim 1, wherein the patterns are selected from a group consisting of pyramidal patterns, embossed patterns and prismatic patterns.

5. The membrane according to claim 1, wherein the patterns are formed of a thermoplastic fluorine-based resin.

6. The membrane according to claim 1, wherein the patterns have a surface roughness of 1.1-1.5.

7. A method for preparing a membrane comprising:
casting a mold, one surface of which having repetitive convex-concave patterns, with a polymer solution to form a mold-polymer layer laminate in which a polymer layer having a surface with replica patterns inverse to the patterns of the mold is formed on the patterns of the mold; and
removing the mold from the mold-polymer layer laminate.

8. The method for preparing a membrane according to claim 7, which comprises:
casting a mold, one surface of which having repetitive convex-concave patterns, with a polymer solution to form a mold-skin layer laminate in which a polymer skin layer having a surface with replica patterns inverse to the patterns of the mold is formed on the patterns of the mold;
disposing a support layer to the skin layer side of the mold-skin layer laminate; and
removing the mold from the mold-skin layer laminate.

9. The method for preparing a membrane according to claim 8, wherein the support layer is disposed on the skin layer side of the mold-skin layer laminate by means of a middle layer.

10. The method for preparing a membrane according to claim 7, wherein the patterns are selected from a group consisting of pyramidal patterns, embossed patterns and prismatic patterns.

11. A water treatment process of filtering water to be treated using a membrane, wherein the membrane is one of those claimed in claims 1 to 6.
